# EUROPEAN PATENT SPECIFICATION

(11) **EP 3 369 636 B1**
(45) Date of publication and mention of the grant of the patent: **19.02.2020**
(21) Application number: 17425023.3
(22) Date of filing: 03.03.2017
(51) Int. Cl.: B61B 7/00, B61B 12/02, B61H 9/02, A63G 21/22, F16D 63/00

(54) **ZIP-LINE SYSTEM AND TROLLEY FOR SUCH ZIP-LINE SYSTEM**
SEILRUTSCHENSYSTEM UND TROLLEY FÜR EIN SOLCHES SEILRUTSCHENSYSTEM
SYSTÈME DE CÂBLE À GLISSIÈRE ET CHARIOT POUR UN TEL SYSTÈME

(43) Date of publication of application: 05.09.2018
(73) Proprietor: Martello Teleferiche S.r.l., 32020 Vallada Agordina (BL) (IT)
(72) Inventor: Martello, Daniele, 32020 Vallada Agordina (BL) (IT)
(74) Representative: Beder, Jens

(56) References cited:
- WO-A1-2012/131432
- WO-A1-2016/191884
- CH-A5- 663 157
- US-A- 6 062 350
- US-B1- 8 037 978
- US-B2- 9 242 659

## Description

The invention regards a zip-line system comprising a trolley for travelling along a route of the system, the zip-line system having a deceleration system, and the trolley. A zip-line system of the prior art is disclosed by the patent US 8,037,978 B1.

Over the last years, zip-line system have become more and more popular. A zip-line system basically consists of a rope connecting two distant points having a height above ground that is sufficient so that a person hung to the trolley can travel from a starting point to an end point of the rope. The starting point is higher than the end point of the system and thus the rope is inclined. Consequently, due to gravity, a person hung on the trolley will accelerate along the rope according to an inclination angle of the rope. At the end of such system, it is then necessary to slow down the trolley so that finally the passenger can exit.

Known systems have a braking system at the end of the rope that comprises an elastic member such as a spring. The disadvantage of such braking or deceleration system is that the trolley transporting the passenger and having currently decelerated by the braking system runs into the elastic member and thus the system is not available for the next passenger until the passenger exited and the braking system is prepared to be ready for the next passenger.

Furthermore, the known system is constructed such that the trolley running into the elastic member compresses the elastic member and in order to avoid that the trolley bounces back, the elastic member has to be locked in its compressed state. However, then after the passenger exited and the trolley is lifted from the rope, the elastic member needs to be decompressed again to be ready for the next braking operation. This, of course, reduces the number of passengers that can enjoy a ride on the zip-line system per time unit. Thus, it would be advantageous if no preparatory measures are needed before the next passenger can be released from a starting point of the zip-line system.

On the other side, safety aspects are of course very important. Due to safety aspects up to now, zip-line systems had the rope spanned between a starting point and an end point with no intermediate column between the starting point and the end point. The reason is that such intermediate columns might cause the trolley to lift from the rope and it is difficult to ensure that the trolley then falls back onto the rope in a correct position so that further travelling is possible and safe. Thus, it would be desirable to reduce the speed when travelling during approaching of such column so that the column can be passed by the trolley with a reduced speed and after that an acceleration is possible, again. Furthermore, the trolley needs a security system that avoids that the trolley is lifted from the rope accidentally to such an extent that it might fall from the rope. Such system on the other side needs to be comfortable in use so that it is possible to quickly put the trolley on the rope and release it after a person exited.

The zip-line system and the trolley according to the independent claims solve the above-mentioned problems. Advantageous embodiments are detailed in the dependent claims.

The zip-line system according to the present invention is defined by the technical features set forth in claim 1.

The big advantage of such system is that a deceleration can be caused simply by passing the magnetic field by the trolley not by running into an elastic element. With respect to the above-stated problems of commonly known zip-line systems this means at the end of the zip-line system in an exit area it is not necessary to set up the braking system after every passenger that arrives in the exit area. The deceleration takes place in a portion of the travel route just before the person exits. Thus, if a person still is in the exit area, nevertheless the next passenger can be released at the starting point of the zip-line already. Even if the next passenger would approach the exit area, he would be decelerated by the magnetic deceleration system which does not need specific preparation. Thus, a big increase in safety is achieved with such deceleration system comprising at least one magnet arranged alongside the rope.

The magnet or the plurality of magnets is/are advantageously attached to a rail that is supported in a fixed positional relation to the rope and with a distance between a rope and the magnet. This is in particular advantageous if the rail supporting the magnets is attached to a column which at the same time guides and supports the rope. This ensures that the rope and the magnets always have a fixed relation to each other and that a trolley passing by travelling along the rope necessarily interacts with the magnetic field. In case that a plurality of magnets is used, it is advantageous to arrange these magnets along the rail, all the magnets having the same orientation. Using a plurality of magnets instead of just one magnet having a stronger magnetic field has the advantage that in case the magnet breaks for example due to harsh weather conditions or the like, still the function of decelerating the trolley with the passenger is given. Again this results in an increased safety.

It is in particular advantageous if the rail which contains the magnets is supported by a column that simultaneously supports the rope. As mentioned above, this ensures that there is a constant distance between the magnets and the trolley. Thus, the deceleration due to eddy currents that are induced in the electrically conducting member of the trolley is always the same and a predictable deceleration of all passengers is given. In order to avoid that the trolley itself is bulky, a frame of the trolley for inducing the eddy currents is used. Thus, according to the invention, the electrically conducting member is a frame member of the trolley.

A particularly advantageous use of the deceleration system is at the end of the zip-line. Thus, according to a preferred embodiment, the deceleration system is arranged at the end of the zip-line in an exit area for passengers. Such exit area is defined by two successive columns of the zip-line system which support the rope in a way that the rope extends substantially horizontal. Thus, the last but one column is basically the end of the travel route and is followed by a deceleration and exit area. The term column includes any structure or object suitable to support the rope, e.g. wall of a house, tree, ....

According to another aspect of the invention the trolley comprises a first frame member and a second frame member sandwiching at least one pulley. The pulley is rotatably supported by the first frame member and the second frame member. Furthermore, the first frame member has attached thereto a first salient and the second frame member has attached thereto a second salient. The second salient is moveable between a travel position and a set-on-position. In the travel position the minimum gap between the first salient and the second salient is smaller than the diameter of the rope. Thus, the rope cannot pass between the two salients and the trolley is secured on the rope. Contrary, in the set-on-position of the second salient, there is a gap between the first salient and the second salient that allows that the rope passes there through. Thus, when the trolley has to be set on the rope, the second salient is moved to the set-on-position and the trolley can be put on the rope.

In order to avoid an accidental movement of the second salient, it is advantageous to provide a locking mechanism that prevents a motion of the second salient from its travel position to its set-on-position. It is in particular advantageous that such locking mechanism functions automatically which means that in case a load is hung to the trolley in the travel position, the second salient is locked in its travel position.

According to a preferred embodiment, the locking mechanism comprises a slidable baseplate on which the second salient is placed. This baseplate comprises a recess with a keyhole-shape. The wider portion of the keyhole-shape corresponds to a diameter of a shaft which is rotatably supported in the first frame member and in the second frame member and which has a truncated portion. This shaft extends through the recess of the baseplate wherein the truncated portion of the shaft is located in its axial direction such that it lies within the plane of the slidable baseplate and blocks or enables the sliding movement of the baseplate depending on the rotational position of the shaft relative to the orientation of the keyhole-recess. Thus, if the truncated portion, establishing two parallel surfaces on opposite sides of the shaft and having a distance to each other which is smaller than the diameter of the shaft, is aligned with the narrower portion of the keyhole-shaped recess, the baseplate can be moved such that the narrower portion of the recess slides over the truncated portion of the shaft.

Furthermore, it is advantageous if the shaft is connected to a suspension arm with a fixed rotational relation. Thus, the shaft is automatically held in a position such that the baseplate is locked as soon as a load is hooked to the suspension arm. An accidental rotation of the shaft is thus prevented by the load as soon as it biases the trolley.

Furthermore, advantageously the suspension arm is mounted to the shaft on an end of the shaft protruding through the first or second member. This ensures that the rotational movement of the suspension arm is not limited by the at least one pulley of the trolley. Furthermore, in case that the shaft is bent at its end opposite to the shaft such that the suspension point lies in the plane of the pulley, this bent portion inhibits to rotate the suspension arm together with the shaft to such an extent that the surfaces of the truncated portion are aligned to the narrower portion of the keyhole, if the trolley is placed with its pulley(s) on the rope.

Furthermore, having the suspension arm attached to the shaft on one side of the trolley where the shaft protrudes through either of the frame members, it is possible to establish the electrically conducting member on the opposite frame side. Thus, in particular the opposite frame member can be made from the electrically conducting material and although the overall width of the trolley is kept as minimal as possible, all the functions can be fulfilled simultaneously.

According to a further advantageous aspect of the inventive trolley, the trolley comprises not only a single pulley, but a first and a second pulley. When viewed from a side, the center of the first and the second pulleys and the first and second salient in the travel position define an isosceles triangle having a height which is the sum of the pulley's radius, the rope's diameter plus a predetermined clearance. This predetermined clearance is adjusted such that it is possible to bring the second salient into its set-up-position and that in this position there is enough space such that the rope can pass by the second salient, be guided between the second salient and the first salient in order to lift the trolley from the rope or to set the trolley on the rope.

Safety can be further increased if the angle between the surfaces of the truncated portion and the center line of the suspension arm in a side view of the trolley is bigger than the maximum angle that can be realized by displacing the suspension arm from a position in which the center line is perpendicular to a connection line of the centers of the two pulleys when the trolley is placed on the rope for travelling with its pulleys in contact with the rope. By having a bent portion at the end of the suspension arm opposite to the shaft it is possible to limit the rotational movement of the suspension arm because of the rope blocking further rotation. Thus, if the angle between the opposite surfaces of the truncated portion is adjusted to be bigger than the maximum angle that can be realized by the suspension arm, an accidental release of the trolley is impossible.

Further advantageous aspects of the inventive trolley and the inventive zip-line system will become apparent by the following explanation of detailed embodiments on the basis of the annexed figures in which
- Fig. 1: shows an overview of the zip-line system;
- Fig. 2: shows the trolley and the deceleration system in a side view;
- Fig. 3: shows a sectional view of the trolley and the deceleration system along line III-III of fig. 2;
- Fig. 4: a), b) to different views to explain the shape of the shaft for supporting the suspension arm;
- Fig. 5: a schematic drawing of the trolley to explain the relative position of its parts; and
- Fig. 6: a schematic of one frame member of the trolley to explain its locking mechanism.

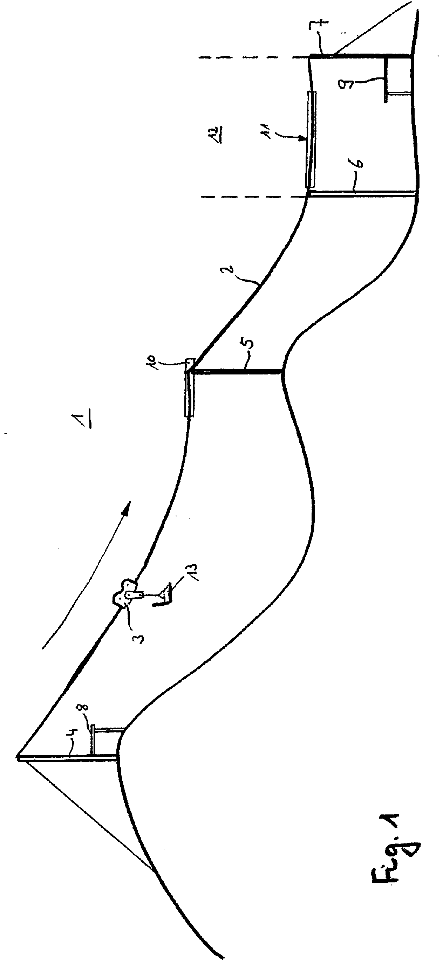

In figure 1, a schematic drawing illustrating a basic arrangement of a zip-line system according to the invention is shown. The zip-line system 1 comprises a rope 2, which is spanned and allows a trolley 3 travelling in the direction indicated by the arrow. In the present embodiment, the zip-line system 1 comprises a first column 4, a second column 5, a third column 6 and a fourth column 7. The first column 4 is the starting point for travelling along the rope 2 and the fourth column 7 is the end point for travelling along the rope 2. The second column 5 is an intermediate column, which might be necessary in order to prevent that the sagging of the rope 2 causes a collision of a passenger with an elevation in the environment. Such intermediate column 5 causes the rope 2 to have two different inclination angles just before the intermediate column 5 and after it. Thus, a trolley 3 to which a seating system 13 is attached might be lifted from the rope 2. In order to avoid such lifting or jumping, a deceleration system 10 according to the invention may be installed in the area of the intermediate column 5. Usually the trolley comprises a further braking system, generating a braking force depending on the trolley's 3 speed. Thus, the inventive brake system may be provided only for critical passages of the zip-line system to further reduce the speed.

An exit area 12 is provided with a deceleration system 11 according to the invention in any case. At the end of the travel route, the passenger and the trolley 3 have to be slowed down so that the passenger can exit the zip-line system 1. Thus, between the third column 6 and the fourth column 7, which define the exit area 12, the deceleration system 11 is installed. It is evident that the height of the rope 2 above ground has to be large enough to ensure that a travelling person sitting in the seat 13 at no time may contact any object or the ground over which the rope 2 extends. Thus, in order to enter a starting platform 8 and in order to exit an exit platform 9 is provided.

The deceleration system 10 and 11 will be explained in greater detail with respect to the following figures. The basic principle is that when a trolley 3 travels along the rope 2 in the direction indicated by the arrow, it passes by a magnetic field. The magnetic field is orientated such that its magnetic field lines are substantially perpendicular to the travelling direction. The trolley 3 comprises an electrically conducting member, which passes the magnetic field and thus, due to the speed of the trolley 3, an eddy current is induced in the electrically conducting member. Such an eddy current generates a decelerating force in a per se known way. Thus, as long as the trolley 3 has a certain speed and it passes through a magnetic field, a decelerating force will be exerted on trolley 3.

As it can be seen in figure 1 if a passenger approaches the end of the zip-line system 1 and reaches the second platform 9, the major part of the decelerating system 11 is already available for the next passenger. Thus, even in case that the person is still on the platform 9 while being released from the seat 13 or a harness or the like, the braking system is already prepared for the next passenger. Thus, the amount of users can be increased drastically. Nevertheless, safety of the passengers is secured at any time.

The deceleration system 10 at the intermediate column 5 on the other side avoids that speed of the trolley 3 gained from the first part of the zip-line system 1 causes the trolley 3 to "jump" when the inclination angle of the rope 2 becomes greater again on a downstream side of the intermediate column 5.

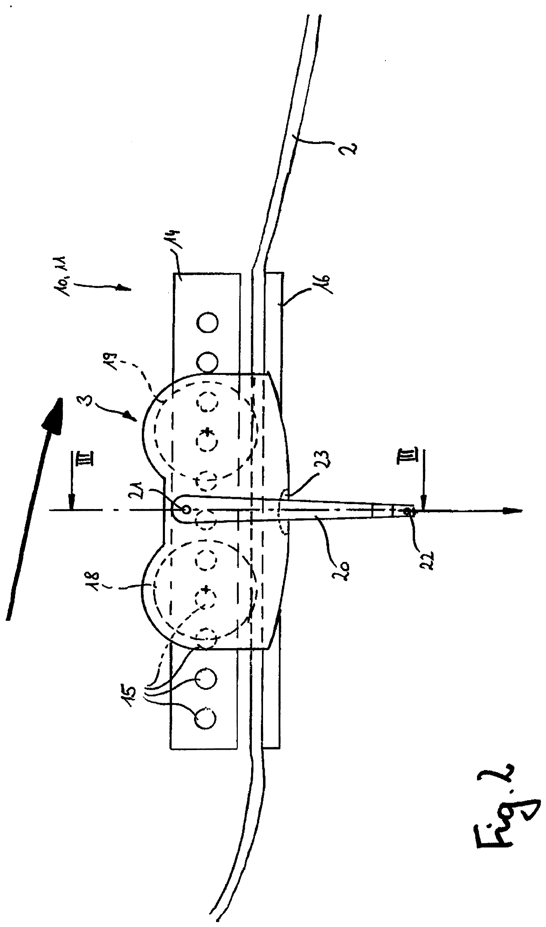

It is to be noted that of course the illustration in figure 1 is purely schematic and that it is for illustrating the principle of the invention only. Details of the invention will become apparent from figures 2 to 6 as explained in the following.

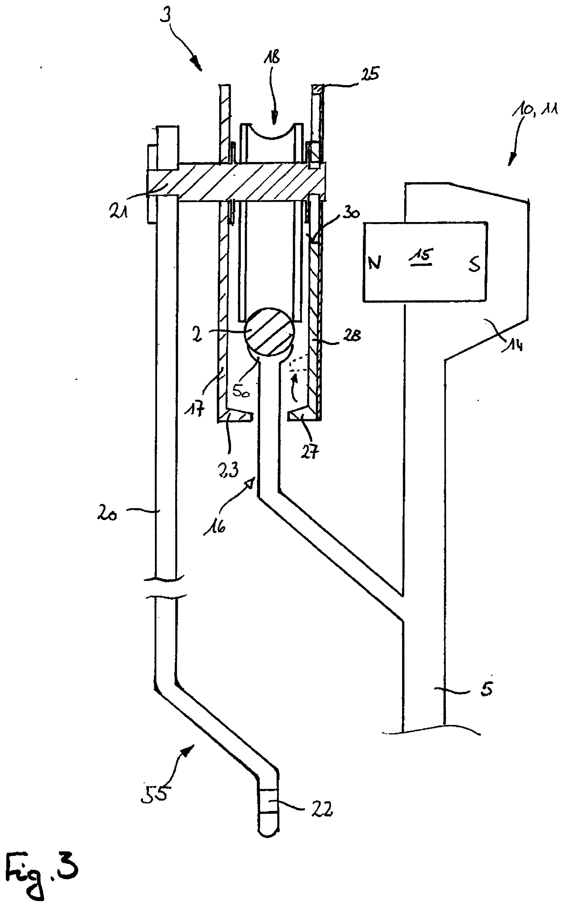

Figure 2 shows a more detailed illustration of the deceleration system 10 or 11. It is shown that the rope 2 is supported by a support member 16, which is attached for example to the intermediate column 5 or the third column 6 shown in figure 1. The support member 16 is configured such that the rope 2 rests on top of the support member 16, which will become clearer later in figure 3.

Parallel to support member 16, a rail 14 is arranged. The rail 14 is provided with a plurality of permanent magnets. The permanent magnets 15 are attached in a distributed manner to rail 14 with equal distances to each other. The magnets 15 are arranged in a line parallel to the direction of the rope 2. The rail 14 is laterally offset to the plane in which the trolley 3 travels so that the trolley 3 can pass the deceleration system 10, 11. While the trolley 3 passes the deceleration system 10, 11 or its magnets 15 respectively, eddy currents are induced in the electrically conducting member of the trolley 3 which may be a frame member of the trolley 3 as explained with respect to fig. 3. These eddy currents generate a braking force on the trolley 3 and thus the trolley 3 including its passenger will be slowed down. It is particularly advantageous if the frame is made from an aluminium alloy.

In the preferred embodiment the trolley 3 comprises two pulleys 18, 19 which are placed on the rope 2 and rotatably supported in the frame of the trolley 3. In fig. 2 a first frame 17 of the trolley 3 can be seen. In an area between the first pulley 18 and the second pulley 19 (side view) a suspension arm 20 is mounted to the frames of the trolley 3. The suspension arm 20 is rotatably supported by a shaft 21. At the end opposite to the connection between the suspension arm 20 and the shaft 21 a through-hole is provided on the suspension arm such that the passenger or the seat to be more precise can be hooked to the suspension arm 20.

Furthermore, shown in dashed lines a first salient 23 is provided on the first frame member 17. This first salient 23 together with a second salient ensures that an accidental release of the rope 2 is avoided.

Fig. 3 shows a cross-sectional drawing along lines III-III in order further explain the details of the present invention. The trolley 3 is shown in a situation where it passes the support member 16 on which the rope 2 rests. The support member 16 therefore has an end section 50 having a greater width than its arm portion. The rope 2 rests on this end section 50. The width of the end section 50 preferably corresponds approximately to the diameter of the rope 2.

As explained already with respect to fig. 2, the trolley 3 comprises a first frame member 17 and a second frame member 25. The first frame member 17 and the second frame member 25 sandwich the first pulley 18 and also the second pulley 19. The pulleys 18, 19 are supported by shafts which are not shown in the drawing.

Attached to the lower end of the first frame member 17 is a first salient 23. The first salient 23 is attached to the first frame member 17 in a fixed manner for example by screws.

A second salient 27 is provided on the side of the second frame member 25. Contrary to the first salient 23, the second salient 27 is movably supported. The second salient 27 is formed on a baseplate 28 that is slidably inserted into a recess of the second frame member 25. The baseplate 28 can be slid in said recess such that the second salient 27 is moved between a travel position which is shown in fig. 3 in solid lines and a set-up-position shown in fig. 3 in dashed lines.

When the second salient 27 is in the travel position, the minimum distance between the first salient 23 and the second salient 27 is smaller than the diameter of the rope 2. Thus, in the shown state of the system the rope 2 is secured between the pulley 18 and the first and second salient 23, 27. Since the sides of the trolley are closed by the first frame member 17 and the second frame member 25, the trolley 3 cannot fall from the rope 2.

On the other side the trolley 3 has to be taken from the rope 2 at the end of the zip-line system 1 and has to be put onto the rope 2 again when a passenger wants to travel. When the second salient 27 is in the set-up-position shown in dashed lines in fig. 3, the distance between the first salient 23 and the second salient 27 is increased such that the rope 2 can pass through between the first salient 23 and the second salient 27. It is to be noted that the distance between the first frame member 17 and the second salient 27 of course needs to be large enough so that the rope 2 can also pass between the first frame member 17 and the second salient 27.

Furthermore, as the support member 50 is increased regarding width compared to a supporting beam, it is possible that the supporting beam passes between the first salient 23 and the second salient 27 when the second salient 27 is in its travel position.

Nevertheless the surface for supporting the rope 2 is wide enough to ensure that the rope 2 securely rests on the support member 50.

The second frame member 25 is made from an aluminium alloy and forms the electrically conducting member of the trolley 3. As shown in the drawing the rail 14 is connected to the column 5, 6 so that the support member 30 and rail 14 including the plurality of magnets 15 have a fixed positional relation to each other. Thus, the magnetic field generated by the permanent magnets 15 having a magnetic axis through the magnetic north and magnetic south perpendicular to the direction of the rope 2 is always close to the second frame member 25.

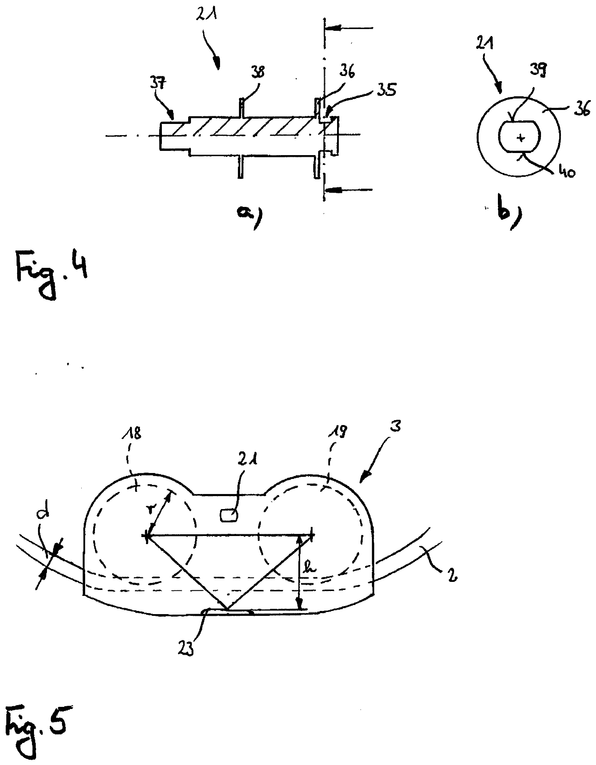

The trolley 3 furthermore has a locking mechanism that ensures that the second salient 27 is always in its travel position as long as the passenger is hooked to the suspension arm 20. The suspension arm 20 is connected to a shaft 21 that extends through the first frame member 17 and the second frame member 25. The shaft 21 is rotatably supported by the first and the second frame member 17, 25. The shaft 21 also extends through the base plate 28 which is provided with recess 30. As will be explained with respect to figure 4, the portion of the shaft 21 which lies in the plane of the recess 30 is truncated thus comprising two parallel surfaces. These parallel surfaces generate a thickness of the shaft 21 in this area which is smaller than the diameter of the shaft 21.

On the other side the base plate 28 has a recess 30 which is formed with a keyhole-shape. The wider part of the keyhole-shape corresponds in diameter with the diameter of shaft 21. The narrower portion of the keyhole-shape on the other side corresponds in width with the thickness of the truncated portion of shaft 21. Thus, only when the shaft 21 which extends through the keyhole-shaped recess 30 is aligned with its truncated portion with the direction of the narrower part of the keyhole-shape recess 30 the base plate 28 may be slided in the direction of the keyhole. On the other hand in a situation where the base plate 28 is positioned such that the wider portion of the recess 30 coincides with the shaft 21, the shaft 21 may be rotated freely in the recess 30. Thus, if the shaft 21 is rotated such that its truncated portion is not aligned with the narrower part of the keyhole-shaped portion the base plate 28 and thus the second salient 27 is locked. The orientation and the position of the keyhole-shaped recess 30 of course is adjusted such that when the wider part of the keyhole-shaped recess 30 is aligned with the position of the shaft 21 the second salient 27 is in the travel position and that if the truncated portion and the narrower part of the keyhole-shaped recess 30 are aligned the second salient 27 can be moved in the set-up-position.

As it can further be seen in figure 3 the suspension arm 20 has a bent portion 55 so that the supporting end 22 of the suspension arm 20 is aligned with the center line of the pulley 18.

Figure 4 illustrates the shaft 21 having a truncated portion 35 as explained already with respect to figure 30 which is positioned in the actual direction of the shaft 21 such that it corresponds to the plane of the base plate 28. Furthermore, the shaft 21 comprises a first portion with an increased diameter 36 and a second portion with an increased diameter 38 in order to send to the shaft 21 between the first frame member 17 and the second frame member 25. The shaft 21 protrudes through the first frame member 17 and at the protruding end 27 there is provided a second truncated portion 37 to which the suspension arm 20 can be attached. Using a second truncated portion 37 for attaching the suspension arm 20 ensures that no relative rotation between the shaft 21 and the suspension arm 20 can occur. Thus, the orientation of the first truncated portion 35 is defined by the direction to which the suspension arm 20 extends.

Fig. 4B shows that the truncated portion 35 establishes two parallel surfaces 39 and 40 such that the thickness of the shaft 21 in this area is reduced as compared to the diameter of the shaft 21.

In figure 5 there is shown the layout of the trolley 3 in order to explain the relative position of the first pulley 18, the second pulley 19 and the salients 23 and 27. The centers of the first pulley 18 and the second pulley 19 define a base line of a triangle. The triangle is an isosceles triangle with its tip being defined by the center of the first salient 23 and the second salient 27 in the travelling direction. The height h of this triangle is defined by the radius r of the pulleys 18, 19, the thickness of the rope 2 plus a predetermined clearance. The predetermined clearance is adjusted such that - coming back to figure 3 - it is possible to move the rope 2 around the second salient 27 and the first salient 23 when the second salient 27 is brought in its set-up-position.

Furthermore, it can be seen in figure 5, that the shaft 21 is arranged on an opposite side of a connecting line of the centers of the first and second pulley 18, 19 with respect to the first salient 23 and second salient 27. This ensures that during operation a maximum rotational displacement of the suspension arm 20 is considerably less than 90° since the bent portion 30 then gets into contact with the rope 2 and no further rotation of the suspension arm 20 is possible. Thus, as long as both of the pulleys 18, 19 are in contact with the rope 20, the second salient 27 may not be moved towards its set-up-position. On the other side if the entire trolley 3 is inclined such that one of the pulleys 18, 19 is lifted from the rope 2, it is possible to twist the suspension arm 20 by 90° such that the truncated portion 35 becomes aligned with the narrower part of the keyhole-recess 30. Then the baseplate 28 together with the second salient 27 may be moved towards its set-up-position and the trolley 3 is be released. In this particular example it is assumed that the truncated portion 35 and the middle line of the suspension arm 20, which in any case have a fixed rotational relation to each other, include a 90° angle.

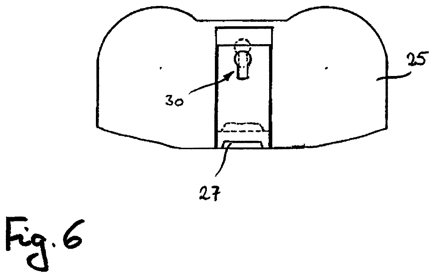

Fig. 6 once more is used to illustrate the slidable movement of the baseplate 28 and thus the second salient 27. It shows the second frame member 25 in a side view including the first pulley 18 and the second pulley 19.

The base plate 28 is inserted into a recess in the second frame member 25. The base plate 28 is provided with the key-shaped recess 30 as shown. In the first position of the base plate 28 in which the second salient 27 directly opposes the first salient 23, the wider portion of the keyhole-shaped recess 30 coincides with a through hole in the first frame member 25. On the other side in the set-up-position of the base plate 28 and thus the second salient 27 the narrower portion of the keyhole-shaped recess 30 coincides with the through hole of the second frame member 25 which accommodates the shaft 21. Thus, in order to bring the base plate 28 into this position it is necessary that the truncated portion and thus the surfaces 39, 40 are aligned with the longitudinal direction of the narrower part of the keyhole-shaped recess 30.

In order to increase the comfort of a user who is responsible for putting the trolley 30 onto the rope 2 and/or releasing it from the rope 2 the base plate 28 is provided with a further salient 41. Thus, it is possible to grip this further salient from the top of the trolley 3 in order to move it from the travel position towards the set-up-position or the other way.

## Claims

1. Zip-line system comprising a trolley, a rope (2) and a deceleration system (10, 11), the trolley (3) being configured to travel along a rope,
wherein
the deceleration system (10, 11) comprises at least one magnet (15) arranged adjacent to the rope (2), the magnet (15) being arranged such that its axis connecting magnetic north and magnetic south is substantially perpendicular to the direction of the rope (2) and wherein the trolley (3) comprises an electrically conducting member (25) for interacting with the magnetic field in response to travelling along the rope (2),
**characterized in that**
the electrically conducting member is a frame (25) of the trolley.

2. Zip-line system according to claim 1,
**characterized in that**
the at least one magnet (15) is attached to a rail (14) which is supported in a fixed relation to the rope (2) and with a distance between the rope (2) and the magnet (15).

3. Zip-line system according to claim 2,
**characterized in that**
the deceleration system (10, 11) comprises a plurality of magnets with same orientation and the magnets being attached along the rail (14) which extends in the travel direction of the trolley (3).

4. Zip-line system according to claim 3,
**characterized in that**
the rail (14) is supported by a column (5, 6) that supports the rope (2).

5. Zip-line system according to any one of claims 1 to 4,
**characterized in that**
that the deceleration system (10, 11) is arranged at the end of the zip-line in an exit area (12) for passengers, which is defined by two successive columns (6, 7) supporting the rope such that the rope extends substantially horizontally.

6. Zip-line system according to any one of claims 1 to 5, the trolley (3) comprising a first frame member (17) and a second frame member (25) sandwiching at least one pulley (18,19), a first salient (23) attached to the first frame member (17) and a second salient (27) movably attached to the second frame member (25), wherein the second salient (27) is movable between a travel position, in which a minimum gap between the first and the second salient (23, 27) are smaller than a diameter of the rope (2), and a trolley launching position, in which the minimum gap is larger than the diameter of the rope (2).

7. Zip-line system according to claim 6,
**characterized in that**
the trolley (3) comprises a locking mechanism that prevents the second salient (27) from being moved from its travel position to its trolley launching position.

8. Zip-line system according to claim 7,
**characterized in that**
the locking mechanism comprises a slidable base plate (28) on which the second salient (27) is placed and which comprises a recess (30) having keyhole-shape, wherein the wider portion of the keyhole-shape corresponds to a diameter of a shaft (21), rotatably supported in the first frame member (17) and in the second frame member (25) and having a truncated (35) portion, wherein the shaft extends through the recess (30) and its truncated portion (35) is located such that it lies within the plane (28) of the slidable base plate (28) and blocks or enables a sliding movement of the base plate depending on its rotational positon relative to the base plate (28).

9. Zip-line system according to claim 8,
**characterized in that**
the shaft (21) is connected to a suspension arm (20) with a fixed rotational relation.

10. Zip-line system according to claim 9,
**characterized in that**
the suspension arm (20) is mounted to the shaft (21) on an end of the shaft (21) protruding on through the first or second frame member (17, 25).

11. Zip-line system according to claim 10
**characterized in that**
the first frame member (17) is made from an electrically conducting material and the end of the shaft (21) on which the suspension arm (20) is mounted protrudes through the second frame member (25).

12. Zip-line system according to any one of claims 9 to 11,
**characterized in that**
the end of the suspension arm (20) opposite to the one connected to the end of the shaft (21) is bent such that suspension point (22) lies in the plane of the pulley (18).

13. Zip-line system according to any one of claims 9 to 12,
**characterized in that**
the first and the second frame member (17, 25) further sandwich a second pulley (19).

14. Zip-line system according to claim 13,
**characterized in that**
in a side view the centers of the two pulleys (18, 19) and the first and second salient (23, 27) in the travel position define an isosceles triangle having a height (h) which is the sum of the pulley's diameter, the rope's radius and a predetermined clearance.

15. Zip-line system according to claim 13 or 14,
**characterized in that**
an angle between the surfaces (39, 40) of the truncated portion (35) and the center line of the suspension arm (20) in a side view is bigger than the maximum angle that can be realized by displacing the suspension arm (20) from a position in which the center line is perpendicular to a connection line of the centers of the two pulleys (18, 19), when the trolley (3) is placed on the rope (2) for travelling.

## Patentansprüche

1. Zip-Line-System mit einer Laufkatze, einem Seil (2) und einem Verzögerungssystem (10, 11), wobei die Laufkatze (3) zum Fahren entlang eines Seils ausgebildet ist,
wobei
das Verzögerungssystem (10, 11) mindestens einen Magneten (15) umfasst, der neben dem Seil (2) angeordnet ist, wobei der Magnet (15) so angeordnet ist, dass seine Achse, die magnetischen Norden und magnetischen Süden verbindet, im Wesentlichen senkrecht zur Richtung des Seils (2) ist, und wobei die Laufkatze (3) ein elektrisch leitendes Element (25) zum Zusammenwirken mit dem Magnetfeld als Reaktion auf das Bewegen entlang des Seils (2) umfasst,
**dadurch gekennzeichnet, dass**
das elektrisch leitende Element ein Rahmen (25) des Wagens ist.

2. Zip-Line-System nach Anspruch 1,
**dadurch gekennzeichnet, dass**
der mindestens eine Magnet (15) an einer Schiene (14) befestigt ist, die in einer festen Beziehung zu dem Seil (2) und mit einem Abstand zwischen dem Seil (2) und dem Magneten (15) gehalten wird.

3. Zip-Line-System nach Anspruch 2,
**dadurch gekennzeichnet, dass**
das Verzögerungssystem (10, 11) eine Mehrzahl von Magneten mit gleicher Ausrichtung umfasst und die Magnete entlang der Schiene (14) befestigt sind, die sich in Fahrtrichtung der Laufkatze (3) erstreckt.

4. Zip-Line-System nach Anspruch 3,
**dadurch gekennzeichnet, dass**
die Schiene (14) von einer Säule (5, 6) getragen wird, die das Seil (2) trägt.

5. Zip-Line-System nach einem der Ansprüche 1 bis 4,
**dadurch gekennzeichnet, dass**
dass das Verzögerungssystem (10, 11) am Ende der Zip-Line in einem Ausstiegsbereich (12) für Fahrgäste angeordnet ist, der durch zwei aufeinanderfolgende Säulen (6, 7) definiert ist, die das Seil so abstützen, dass das Seil im Wesentlichen horizontal verläuft.

6. Zip-Line-System nach einem der Ansprüche 1 bis 5, wobei die Laufkatze (3) ein erstes Rahmenelement (17) und ein zweites Rahmenelement (25), das mindestens eine Rolle (18, 19) sandwichartig aufnimmt, einen ersten Vorsprung (23), der an dem ersten Rahmenelement (17) befestigt ist, und einen zweiten Vorsprung (27), der beweglich an dem zweiten Rahmenelement (25) befestigt ist, umfasst, wobei der zweite Vorsprung (27) zwischen einer Fahrposition, in der ein minimaler Spalt zwischen dem ersten und dem zweiten Vorsprung (23, 27) kleiner als ein Durchmesser des Seils (2) ist, und einer Laufkatzenstartposition, in der der minimale Spalt größer als der Durchmesser des Seils (2) ist, bewegbar ist.

7. Zip-Line-System nach Anspruch 6,
**dadurch gekennzeichnet, dass**
der Wagen (3) einen Verriegelungsmechanismus aufweist, der verhindert, dass der zweite Vorsprung (27) von seiner Fahrposition in seine Laufkatzenstartposition bewegt werden kann.

8. Zip-Line-System nach Anspruch 7,
**dadurch gekennzeichnet, dass**
der Verriegelungsmechanismus eine verschiebbare Grundplatte (28) aufweist, auf der der zweite Vorsprung (27) angeordnet ist und die eine Aussparung (30) mit Schlüssellochform aufweist, wobei der breitere Abschnitt der Schlüssellochform einem Durchmesser einer Welle (21) entspricht, die drehbar in dem ersten Rahmenelement (17) und in dem zweiten Rahmenelement (25) gelagert ist und einen abgestumpften (35) Abschnitt aufweist, wobei sich die Welle durch die Ausnehmung (30) erstreckt und ihr kegelstumpfförmiger Abschnitt (35) so angeordnet ist, dass er in der Ebene (28) der verschiebbaren Grundplatte (28) liegt und eine Gleitbewegung der Grundplatte in Abhängigkeit von ihrer Drehstellung relativ zur Grundplatte (28) blockiert oder ermöglicht.

9. Zip-Line-System nach Anspruch 8,
**dadurch gekennzeichnet, dass**
die Welle (21) mit einem Aufhängungsarm (20) mit einer festen Drehbeziehung verbunden ist.

10. Zip-Line-System nach Anspruch 9,
**dadurch gekennzeichnet, dass**
der Aufhängungsarm (20) an der Welle (21) an einem Ende der Welle (21) montiert ist, das durch das erste oder zweite Rahmenelement (17, 25) hindurch vorsteht.

11. Zip-Line-System nach Anspruch 10
**dadurch gekennzeichnet, dass**
das erste Rahmenelement (17) aus einem elektrisch leitenden Material hergestellt ist und das Ende der Welle (21), an dem der Aufhängungsarm (20) montiert ist, durch das zweite Rahmenelement (25) hindurchragt.

12. Zip-Line-System nach einem der Ansprüche 9 bis 11,
**dadurch gekennzeichnet, dass**
das Ende des Aufhängungsarms (20), das dem mit dem Ende der Welle (21) verbundenen Ende gegenüberliegt, so gebogen ist, dass der Aufhängungspunkt (22) in der Ebene der Scheibe (18) liegt.

13. Zip-Line-System nach einem der Ansprüche 9 bis 12,
**dadurch gekennzeichnet, dass**
das erste und das zweite Rahmenteil (17, 25) zusätzlich eine zweite Riemenscheibe (19) zwischen sich aufnehmen.

14. Zip-Line-System nach Anspruch 13,
**dadurch gekennzeichnet, dass**
in einer Seitenansicht die Mittelpunkte der beiden Rollen (18, 19) und der erste und zweite Vorsprung (23, 27) in der Fahrposition ein gleichschenkliges Dreieck mit einer Höhe (h) definieren, die die Summe des Rollendurchmessers, des Seilradius und eines vorbestimmten Spiels ist.

15. Zip-Line-System nach Anspruch 13 oder 14,
**dadurch gekennzeichnet, dass**
ein Winkel zwischen den Oberflächen (39, 40) des abgeschnittenen Teils (35) und der Mittellinie des Aufhängungsarms (20) in einer Seitenansicht größer ist als der maximale Winkel, der durch Verschieben des Aufhängungsarms (20) aus einer Position, in der die Mittellinie senkrecht zu einer Verbindungslinie der Mitten der beiden Rollen (18, 19) ist, wenn die Laufkatze (3) zum Fahren auf dem Seil (2) angeordnet ist, realisiert werden kann.

## Revendications

1. Système de tyrolienne comprenant un chariot, un câble (2) et un système de décélération (10, 11), le chariot (3) étant configuré pour circuler le long d'un câble,
dans lequel
le système de décélération (10, 11) comprend au moins un aimant (15) agencé adjacent au câble (2), l'aimant (15) étant agencé de sorte que son axe reliant le nord magnétique et le sud magnétique est sensiblement perpendiculaire à la direction du câble (2) et dans lequel le chariot (3) comprend un organe électriquement conducteur (25) pour interagir avec le champ magnétique en réponse à une circulation le long du câble (2),
**caractérisé en ce que**
l'organe électriquement conducteur est un châssis (25) du chariot.

2. Système de tyrolienne selon la revendication 1,
**caractérisé en ce que**
l'au moins un aimant (15) est fixé à un rail (14) qui est supporté dans une relation fixe sur le câble (2) et avec une distance entre le câble (2) et l'aimant (15).

3. Système de tyrolienne selon la revendication 2,
**caractérisé en ce que**
le système de décélération (10, 11) comprend une pluralité d'aimants de même orientation et les aimants sont fixés le long du rail (14) qui s'étend dans la direction de circulation du chariot (3).

4. Système de tyrolienne selon la revendication 3,
**caractérisé en ce que**
le rail (14) est supporté par une colonne (5, 6) qui supporte le câble (2).

5. Système de tyrolienne selon l'une quelconque des revendications 1 à 4,
**caractérisé en ce que**
le système de décélération (10, 11) est agencé au niveau de l'extrémité de la tyrolienne dans une zone de sortie (12) de passagers, qui est définie par deux colonnes (6, 7) successives supportant le câble de sorte que le câble s'étend sensiblement horizontalement.

6. Système de tyrolienne selon l'une quelconque des revendications 1 à 5, le chariot (3) comprenant un premier organe de châssis (17) et un deuxième organe de châssis (25) enserrant au moins une poulie (18, 19), une première saillie (23) fixée au premier organe de châssis (17) et une deuxième saillie (27) fixée mobile au deuxième organe de châssis (25),
dans lequel la deuxième saillie (27) est mobile entre une position de circulation, dans laquelle un écartement minimal entre la première et la deuxième saillie (23, 27) est plus petit qu'un diamètre du câble (2), et une position de lancement de chariot, dans laquelle l'écartement minimal est plus grand que le diamètre du câble (2).

7. Système de tyrolienne selon la revendication 6,
**caractérisé en ce que**
le chariot (3) comprend un mécanisme de verrouillage qui empêche la deuxième saillie (27) de se mouvoir de sa position de circulation à sa position de lancement de chariot.

8. Système de tyrolienne selon la revendication 7,
**caractérisé en ce que**
le mécanisme de verrouillage comprend une plaque de base coulissante (28) sur laquelle la deuxième saillie (27) est placée et qui comprend un évidement (30) ayant une forme de trou de serrure, dans lequel la portion plus large de la forme de trou de serrure correspond à un diamètre d'un arbre (21), supporté en rotation dans le premier organe de châssis (17) et dans le deuxième organe de châssis (25) et ayant une portion tronquée (35), dans lequel l'arbre s'étend à travers l'évidement (30) et sa portion tronquée (35) est située de sorte qu'elle se trouve au sein du plan (28) de la plaque de base coulissante (28) et bloque ou permet à un mouvement coulissant de la plaque de base en fonction de sa position de rotation par rapport à la plaque de base (28).

9. Système de tyrolienne selon la revendication 8,
**caractérisé en ce que**
l'arbre (21) est raccordé à un bras de suspension (20) avec une relation de rotation fixe.

10. Système de tyrolienne selon la revendication 9,
**caractérisé en ce que**
le bras de suspension (20) est monté sur l'arbre (21) sur une extrémité de l'arbre (21) dépassant à travers le premier ou deuxième organe de châssis (17, 25).

11. Système de tyrolienne selon la revendication 10,
**caractérisé en ce que**
le premier organe de châssis (17) est réalisé en un matériau électriquement conducteur et l'extrémité de l'arbre (21) sur laquelle le bras de suspension (20) est monté dépasse à travers le deuxième organe de châssis (25).

12. Système de tyrolienne selon l'une quelconque des revendications 9 à 11,
**caractérisé en ce que**
l'extrémité du bras de suspension (20) opposée à celle qui est raccordée à l'extrémité de l'arbre (21) est courbée de sorte qu'un point de suspension (22) se trouve dans le plan de la poulie (18).

13. Système de tyrolienne selon l'une quelconque des revendications 9 à 12,
**caractérisé en ce que**
le premier et le deuxième organe de châssis (17, 25) enserrent en outre une deuxième poulie (19).

14. Système de tyrolienne selon la revendication 13,
**caractérisé en ce que**
dans une vue de profil, les centres des deux poulies (18, 19) et les première et deuxième saillies (23, 27) dans la position de circulation définissent un triangle isocèle ayant une hauteur (h) qui est la somme du diamètre de la poulie, du rayon du câble et d'un débattement prédéterminé.

15. Système de tyrolienne selon la revendication 13 ou 14,
**caractérisé en ce que**
un angle entre les surfaces (39, 40) de la portion tronquée (35) et la ligne centrale du bras de suspension (20) dans une vue de profil est plus grand que l'angle maximal qui peut être réalisé en déplaçant le bras de suspension (20) depuis une position dans laquelle la ligne centrale est perpendiculaire à une ligne de raccordement des centres des deux poulies (18, 19), lorsque le chariot (3) est placé sur le câble (2) pour circuler.
